# DEMANDE DE BREVET EUROPEEN

(11) **EP 1 267 477 A2**
(43) Date de publication de la demande: **18.12.2002**
(21) Numéro de dépôt: 02291438.6
(22) Date de dépôt: 11.06.2002
(51) Int. Cl.: H02M 3/335

(54) **Convertisseur DC-DC basse tension/haute tension à stockage capacitif haute fréquence**

(30) Priorité: 11.06.2001 FR 0107576
(71) Demandeur: Scheiber S.A., 85120 Saint Pierre Du Chemin (FR)
(72) Inventeur: Levron, Patrice, 49450 Saint Macaire en Mauges (FR); Cocquerelle, Jean-Louis, 44300 Nantes (FR)
(74) Mandataire: Laget, Jean-Loup

(57) **Abrégé**

L'invention concerne un convertisseur (1) courant continu-courant continu (DC-DC) basse tension/haute tension à stockage capacitif haute fréquence comprenant, entre une source (10) de tension continue d'entrée et la sortie du circuit, au moins un condensateur (2) côté basse tension stockant l'énergie transférée par le convertisseur (1), ce condensateur (2) étant disposé en série avec le primaire basse tension d'un transformateur (3) haute fréquence monophasé et des composants (4) de stockage de l'énergie côté haute tension.

Ce convertisseur est caractérisé en ce que le condensateur (2) côté basse tension stockant l'énergie transférée par le convertisseur (1) est un condensateur (2) céramique à usage standard pour les circuits à haute fréquence.

## Description

La présente invention concerne un convertisseur courant continu-courant continu (DC-DC) basse tension/haute tension à stockage capacitif haute fréquence comprenant, entre une source de tension continue d'entrée et la sortie du circuit, au moins un condensateur côté basse tension stockant l'énergie transférée par le convertisseur, ce condensateur étant disposé en série avec le primaire basse tension d'un transformateur haute fréquence monophasé et des composants de stockage de l'énergie côté haute tension.

Il est techniquement difficile de stocker une énergie haute fréquence. En effet, une solution classique pour le stockage d'une telle énergie consiste à utiliser des selfs en vue d'un stockage inductif.

On connaît par ailleurs un convertisseur de courant continu en continu à découpage comme l'illustre le brevet EP-A-0.176.413. Dans ce cas, le condensateur est utilisé dans un circuit oscillant pour faire la résonance (montage dit flyback résonnant) et non pour un stockage d'énergie de type capacitif. De ce fait, le condensateur est associé à une inductance pour osciller. Le primaire du transformateur n'est pas directement en série avec le condensateur car le condensateur est en parallèle avec l'inductance elle-même en série avec un interrupteur 22 ou une diode 24. Le primaire du transformateur, la conductance, l'inductance, le transistor et la diode constituent donc une association série-parallèle.

Le document US-A-4.914.539 décrit un convertisseur auto-oscillant dans lequel une batterie de condensateurs est utilisée pour faire l'accord du circuit inductif d'entrée.

Un but de la présente invention est de proposer un convertisseur courant continu-courant continu (DC-DC) basse tension/haute tension à stockage capacitif haute fréquence d'un nouveau type dont la conception des éléments le constituant permet de réduire l'encombrement de l'ensemble, de minimiser et d'optimiser la longueur des connexions entre les différents composants pour éviter toute surtension de l'ensemble en vue de prévenir l'apparition de dysfonctionnements.

A cet effet, l'invention a pour objet un convertisseur courant continu-courant continu (DC-DC) basse tension/haute tension à stockage capacitif haute fréquence comprenant, entre une source de tension continue d'entrée et la sortie du circuit, au moins un condensateur côté basse tension stockant l'énergie transférée par le convertisseur, ce condensateur étant disposé en série avec le primaire basse tension d'un transformateur haute fréquence monophasé, et des composants de stockage de l'énergie côté haute tension, caractérisé en ce que le condensateur côté basse tension stockant l'énergie transférée par le convertisseur est un condensateur céramique à usage standard pour les circuits à haute fréquence.

L'utilisation de condensateur céramique, utilisé à ce jour pour le découplage, c'est-à-dire l'isolation de certains circuits électroniques et non pour le stockage d'énergie haute fréquence, permet d'obtenir un convertisseur courant continu-courant continu (DC-DC) basse tension/haute tension à stockage capacitif haute fréquence particulièrement performant sur le plan électrique et de faible encombrement de manière à permettre son embarquement, en particulier sur des engins mobiles tels que véhicules.

L'invention sera bien comprise à la lecture de la description suivante d'exemples de réalisation, en référence aux dessins annexés dans lesquels :
la figure 1 représente le schéma de principe du circuit électrique d'un convertisseur conforme à l'invention ;
la figure 2 représente une vue de dessus du convertisseur en l'absence d'un transformateur ;
la figure 3 représente une vue de dessus du convertisseur en présence d'un transformateur ;
la figure 4 représente une vue de dessous du convertisseur ;
la figure 5 représente une vue de dessus d'un autre mode de réalisation du convertisseur en l'absence d'un transformateur et
la figure 6 représente une vue de dessus du convertisseur de la figure 5 dans lequel le transformateur a été représenté.

Le convertisseur 1 courant continu-courant continu (DC-DC) basse tension/haute tension à stockage capacitif haute fréquence, objet de l'invention, se compose essentiellement, entre une source 10 de tension continue d'entrée et la sortie 11 du circuit, d'un transformateur 3 avec un circuit primaire d'entrée et un circuit secondaire de sortie. Le circuit primaire comporte essentiellement en série : une source 10 de tension continue d'entrée, une inductance d'entrée L, un condensateur 2 et le primaire du transformateur 3. La source 10 de tension continue d'entrée du circuit peut être constituée par un générateur continu tel que la batterie d'un véhicule, en particulier dans le cas d'un convertisseur embarqué. Une inductance d'entrée L disposée entre source 10 de tension et condensateur 2 transforme la source 10 de tension continue en source de courant. Elle ne constitue en aucun cas un circuit oscillant avec ce condensateur. Le condensateur 2 est disposé directement en série avec le primaire du transformateur 3 ; il peut être remplacé par plusieurs condensateurs en parallèle, et il assure, du côté basse tension, le stockage de l'énergie transférée par le convertisseur 1. En parallèle sur l'ensemble du condensateur 2 et du primaire du transformateur 3, est prévu un transistor T fonctionnant en commutation dure, c'est-à-dire que le courant drain n'est jamais nul à l'instant du blocage provoqué par la suppression du signal de grille. Il n'est ainsi pas nécessaire de mettre en place un circuit d'aide à la commutation du type "résonnant".

Le circuit secondaire comporte en série le secondaire du transformateur 3, les composants 4 de stockage de l'énergie du côté haute tension, constitués essentiellement par un ou plusieurs condensateurs en parallèle, une inductance 12 et la sortie 11. En parallèle sur l'ensemble du secondaire de transformateur 3 et des composants 4 de stockage, est disposée une diode 13. En parallèle sur le sortie 11 est disposé un condensateur 14.

Les composants de stockage de l'énergie côté haute tension, représentés en 4 aux figures, peuvent quant à eux être constitués par un ou plusieurs condensateurs polyester. Le transformateur 3 haute fréquence monophasé est quant à lui constitué d'au moins une carcasse 6 présentant un mandrin 7 traversé par un ou plusieurs noyaux magnétiques. Les bobinages primaire et secondaire du transformateur sont enroulés autour du mandrin 7.

De manière caractéristique à l'invention, le condensateur 2 côté basse tension, qui stocke l'énergie transférée par le convertisseur, est un condensateur céramique à usage standard pour les circuits à haute fréquence. Le ou les condensateurs 2 céramiques sont choisis de manière telle que le volume du ou des condensateurs 2 céramiques exprimé en mm³ est au plus égal aux 3/2 de la puissance nominale exprimée en Watt du convertisseur. Le ou les condensateurs céramiques sont des condensateurs multicouches.

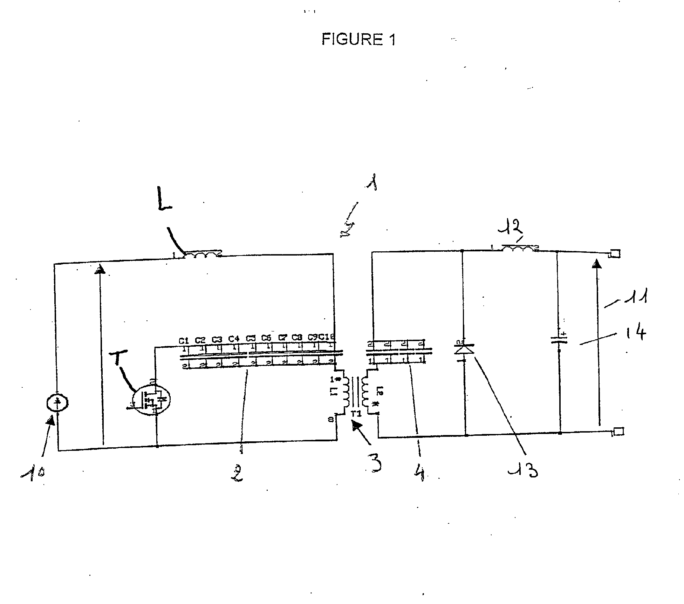

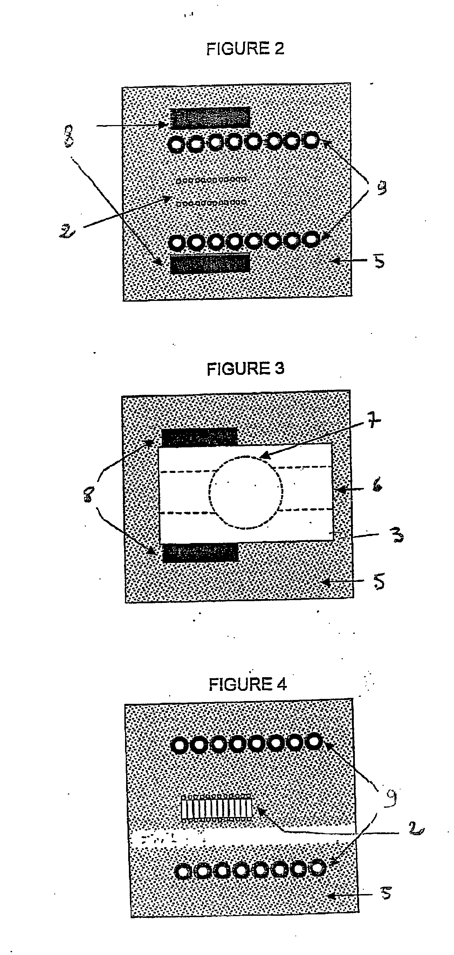

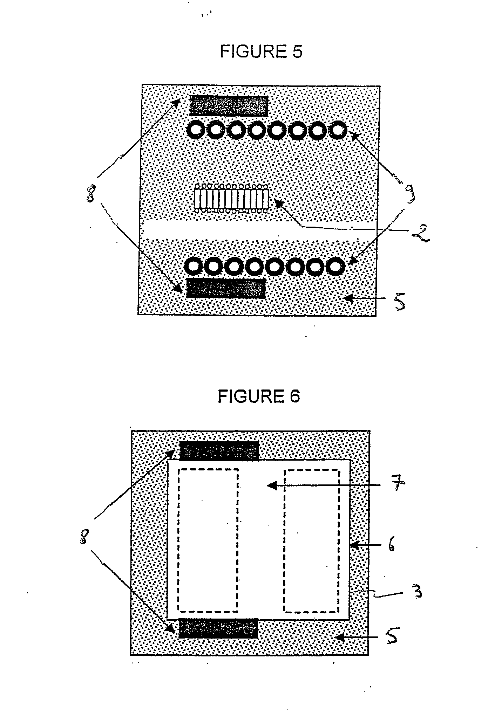

De préférence, un tel convertisseur 1 comporte une batterie de condensateurs 2 céramiques montés en parallèle, comme l'illustre la figure 1 où ces condensateurs sont représentés de C1 à C10. Ces condensateurs 2 sont reliés à l'entrée de l'enroulement primaire du transformateur 3 haute fréquence. Le ou les condensateurs 2 céramiques et le transformateur 3 sont connectés électriquement à un circuit imprimé 5. Pour permettre d'optimiser les connexions et de réduire au maximum leur longueur, le ou les condensateurs 2 céramiques sont logés à l'intérieur du périmètre défini par le gabarit extérieur du transformateur pour former un empilement soit d'un premier type dans lequel le condensateur 2 est logé entre circuit 5 imprimé et transformateur 3, comme l'illustrent les figures 5 et 6, soit d'un second type dans lequel le circuit 5 imprimé est logé entre condensateur 2 et transformateur 3, comme l'illustrent les figures 2 à 4.

Ainsi, la figure 2 représente en 8 les zones de raccordement de l'enroulement primaire du transformateur 3 avec le circuit imprimé 5. Les condensateurs 2 céramiques sont ici représentés uniquement par leur connexion au circuit 5 imprimé puisqu'ils sont disposés sur l'autre face du circuit 5 imprimé. Enfin, des trous 9 représentent les organes de positionnement et de fixation du transformateur 3. Le transformateur 3 peut ainsi être connecté électriquement au circuit 5 imprimé et occuper une position conforme à celle représentée à la figure 3 dans laquelle le noyau ou mandrin 7 du transformateur 3 est disposé de manière telle que l'axe d'enroulement des bobinages primaire ou secondaire du transformateur est perpendiculaire au plan défini par la surface du circuit 5 imprimé.

La figure 4 illustre quant à elle à nouveau les trous 9 symbolisant le positionnement et la fixation du transformateur 3 ainsi que le positionnement des condensateurs visibles sur cette face du circuit 5 imprimé.

Dans les figures 5 et 6, dans lesquelles les mêmes références numériques ont été utilisées pour désigner les mêmes constituants, on note que l'axe d'enroulement des bobinages primaire ou secondaire du transformateur 3 est parallèle au plan défini par la surface du circuit 5 imprimé. Par ailleurs, dans ce cas, comme l'illustre la figure 5, les condensateurs 2 sont disposé entre circuit 5 imprimé et transformateur 3.

Indépendamment de la disposition des éléments, condensateurs 2, transformateur 3 et circuit 5 imprimé, l'enroulement primaire du transformateur 3 est quant à lui constitué d'une spire unique formée de conducteurs parallèles isolés entre eux, réunis électriquement aux extrémités. Chaque conducteur est multi-brins. Ainsi, les conducteurs constitutifs de l'enroulement primaire du transformateur sont de préférence constitués de fils, de préférence en cuivre, isolés par un vernis et enrubannés par un ruban en matériau diélectrique, tel que du coton.

Pour permettre une modularité de la puissance d'un tel convertisseur 1, ce convertisseur 1 est connectable en parallèle à un ou plusieurs autres convertisseurs du même type. Il en résulte une augmentation de la puissance nominale du convertisseur.

Par ailleurs, un tel convertisseur 1 peut être associable à un second convertisseur en cascade constitué d'au moins un onduleur de tension à modulation de largeur d'impulsion à deux niveaux (bipolaire). Ce second convertisseur permettra ainsi de transformer la tension continue de sortie du premier convertisseur en une tension alternative.

## Revendications

1. Convertisseur (1) courant continu-courant continu (DC-DC) basse tension/haute tension à stockage capacitif haute fréquence comprenant, entre une source (10) de tension continue d'entrée et la sortie du circuit, au moins un condensateur (2) côté basse tension stockant l'énergie transférée par le convertisseur (1), ce condensateur (2) étant disposé en série avec le primaire basse tension d'un transformateur (3) haute fréquence monophasé et des composants (4) de stockage de l'énergie côté haute tension, **caractérisé en ce que** le condensateur (2) côté basse tension stockant l'énergie transférée par le convertisseur (1) est un condensateur (2) céramique à usage standard pour les circuits à haute fréquence.

2. Convertisseur (1) selon la revendication 1,
**caractérisé en ce qu'**il comporte une batterie de condensateurs (2) céramiques montés en parallèle, lesdits condensateurs (2) étant reliés à l'entrée de l'enroulement primaire du transformateur (3) haute fréquence.

3. Convertisseur (1) selon l'une des revendications 1 et 2, **caractérisé en ce que** le volume du ou des condensateurs (2) céramiques exprimé en mm³ est au plus égal aux 3/2 de la puissance nominale exprimée en Watt du convertisseur (1).

4. Convertisseur (1) selon l'une des revendications 1 à 3, **caractérisé en ce que** le ou les condensateurs céramiques sont des condensateurs multi-couches.

5. Convertisseur (1) selon l'une des revendications 1 à 4, **caractérisé en ce que** le ou les condensateurs (2) céramiques et le transformateur (3) sont connectés électriquement à un circuit (5) imprimé, le ou les condensateurs (2) étant logés à l'intérieur du périmètre défini par le gabarit extérieur du transformateur (3) pour former un empilement soit d'un premier type dans lequel le ou les condensateurs sont logés entre circuit (5) imprimé et transformateur (3), soit d'un second type dans lequel le circuit (5) imprimé est logé entre condensateur (2) et transformateur (3).

6. Convertisseur (1) selon l'une des revendications 1 à 5, dans lequel le transformateur (3) haute fréquence monophasé est constitué d'au moins une carcasse (6) présentant un mandrin (7) traversé par un ou plusieurs noyaux magnétiques, les bobinages primaire et secondaire du transformateur (3) étant enroulés autour du mandrin (7), **caractérisé en ce que** l'axe d'enroulement des bobinages primaire ou secondaire du transformateur (3) est parallèle au plan du circuit (5) imprimé.

7. Convertisseur (1) selon l'une des revendications 1 à 5 dans lequel le transformateur (3) haute fréquence monophasé est constitué d'au moins une carcasse (6) présentant un mandrin (7) traversé par un ou plusieurs noyaux magnétiques, les bobinages primaire et secondaire du transformateur (3) étant enroulés autour du mandrin (7), **caractérisé en ce que** l'axe d'enroulement des bobinages primaire ou secondaire du transformateur (3) est perpendiculaire au plan du circuit (5) imprimé.

8. Convertisseur (1) selon l'une des revendications 1 à 7, dans lequel le transformateur (3) haute fréquence monophasé est constitué d'au moins une carcasse (6) présentant un mandrin (7) traversé par un ou plusieurs noyaux magnétiques, les bobinages primaire et secondaire du transformateur (3) étant enroulés autour du mandrin (7), **caractérisé en ce que** l'enroulement primaire du transformateur (3) est constitué d'une spire unique formée de conducteurs parallèles isolés entre eux, réunis électriquement aux extrémités, chaque conducteur étant multi-brins.

9. Convertisseur (1) selon la revendication 8,
**caractérisé en ce que** les conducteurs constitutifs de l'enroulement primaire du transformateur (3) sont constitués de fils, de préférence en cuivre, isolés par un vernis et enrubannés par un ruban en matériau diélectrique, tel que du coton.

10. Convertisseur (1) selon l'une des revendications 1 à 9, **caractérisé en ce qu'**il est connectable en parallèle à un ou plusieurs autres convertisseurs du même type pour augmenter la puissance nominale du convertisseur.

11. Convertisseur (1) selon l'une des revendications 1 à 10,
**caractérisé en ce qu'**il est associable à un deuxième convertisseur en cascade constitué d'au moins un onduleur de tension à modulation de largeur d'impulsions à deux niveaux (bipolaire).
